# EUROPÄISCHE PATENTSCHRIFT

(11) **EP 4 170 210 B1**
(45) Veröffentlichungstag und Bekanntmachung des Hinweises auf die Patenterteilung: **19.02.2025**
(21) Anmeldenummer: 22197493.4
(22) Anmeldetag: 23.09.2022
(51) Int. Cl.: F16K 31/122, F16K 31/524, B60G 17/052, B60G 17/056, F16K 11/16, F16K 11/20, F16K 35/04

(54) **VENTILEINRICHTUNG SOWIE FAHRZEUG MIT EINER VENTILEINRICHTUNG**
VALVE DEVICE AND VEHICLE HAVING A VALVE DEVICE
DISPOSITIF DE SOUPAPE ET VÉHICULE DOTÉ D'UN DISPOSITIF DE SOUPAPE

(30) Priorität: 20.10.2021 DE 102021127201
(43) Veröffentlichungstag der Anmeldung: 26.04.2023
(73) Patentinhaber: ZF CV Systems Europe BV, 1170 Brüssel (BE)
(72) Erfinder: DIET, Felix, 31552 Rodenberg (DE); GERLACH, Steffen, 30169 Hannover (DE); STENDER, Axel, 31787 Hameln (DE)
(74) Vertreter: Ohlendorf, Henrike

(56) Entgegenhaltungen:
- EP-A1- 2 263 893
- WO-A1-2008/095704
- CN-A- 103 253 102
- DE-A1- 102006 006 439
- DE-A1- 102014 108 557

## Beschreibung

Die Erfindung betrifft eine Ventileinrichtung gemäß Anspruch 1 sowie ein Fahrzeug gemäß Anspruch 14, insbesondere ein Nutzfahrzeug, insbesondere ein Lastkraftfahrzeug, das eine derartige Ventileinrichtung aufweist. Ventileinrichtungen dieser Art werden beispielsweise als manuell bedienbare Niveauregulierungsventile und für elektronisch geregelte Luftfederungseinrichtungen von Lastkraftfahrzeugen verwendet. Moderne, elektronisch geregelte Luftfederungseinrichtungen verwenden elektrische und/oder pneumatisch arbeitende Ansteuerungen für eine Belüftung von Luftfederbälgen und weisen üblicherweise auch ein mit der Hand zu betätigendes Niveauregulierungsventil auf, das vier Stellungen aufweist:
- Heben: die Luftfederbälge werden aus einem Luftvorrat belüftet,
- Senken: die Luftfederbälge werden an die Umgebung entlüftet,
- Stoppstellung: die Luftfederbälge sind von der Umgebung und dem Luftvorrat abgeschnitten, und
- Fahrtstellung: die Luftfederbälge sind mit einem Luftfederventil verbunden.

Ein Niveauregulierungsventil nach dem Stand der Technik, von dem Unternehmen ZF als eTASC-Ventil angeboten, nimmt eine Sonderstellung ein. Das Fahrniveau wird hier über eine in einem Steuergerät integrierte Funktion durch entsprechende Betätigung des Niveauregulierungsventils in die Heben-Stellung oder in die Senken-Stellung ausgeregelt. Hier ist somit die Fahrtstellung mit der Stopp-Stellung identisch.

Niveauregulierungsventile für eine konventionelle Luftfederung verrasten üblicherweise in der Stopp-Stellung. Zusätzlich gibt es Niveauregulierungsventile, die in der Senken-Stellung verrasten. Um das Fahrzeug nach Fahrtantritt, im Allgemeinen nach Überschreiten einer Geschwindigkeitsschwelle, wieder in das Fahrniveau zu bringen, muss diese Verrastung wieder gelöst werden. Dies geschieht bei den am Markt erhältlichen Ventilen mithilfe eines elektropneumatisch betätigten Kolbens bzw. direkt mit einem starken Magneten. Diese Funktion ist als RTR- (Return-to-Ride) Funktion bekannt.

Die Notwendigkeit dieser zusätzlichen Bauteile für die RTR-Funktion führt dabei zu erhöhten Herstellungskosten und vergrößerten Abmaßen des Gerätes.

EP 2 263 893 A1 offenbart eine Schaltventileinheit mit einer Ventilbaugruppe, wobei eine manuelle Betätigungseinrichtung vorgesehen ist. Die Betätigungseinrichtung weist eine um eine Schwenkachse verschwenkbare Kurvenscheibe auf, die eine Kurvenfläche mit einer Betätigungskontur besitzt. Die Betätigungskontur betätigt Stößel, die translatorisch und parallel zur Schwenkachse der Kurvenscheibe geführt sind. Über die Stößel werden Ventile der Ventilbaugruppe betätigt. Die Ventile können auch durch eine pneumatische Beaufschlagung betätigt werden.

CN 103 253 102 B offenbart eine Ventilvorrichtung mit mehreren Ventilsystemen, wobei jedes Ventilsystem einen Stößel zu einer mechanischen Betätigung und einen Stößel zu einer pneumatischen Betätigung aufweist. Die Ventilsysteme sind um eine Welle herum angeordnet, die umlaufende Betätigungskonturen aufweist. Dabei sind jeweils zwei gegenüberliegende Ventilsysteme so angeordnet, dass ihre Stößel zur mechanischen Betätigung mit derselben Betätigungskontur in Kontakt stehen. Jeweils zwei weitere Ventilsysteme sind an einer weiteren, an derselben Welle angeordneten Betätigungskontur angeordnet. Mittels eines Bedienelements wird die Welle gedreht.

Die nicht vorveröffentlichten DE 10 2021 125 122 A1 und DE 10 2021 125 123 A1 offenbaren jeweils eine Ventileinrichtung mit einem ersten und einem zweiten Ventil mit jeweils einer manuellen, elektrischen und pneumatischen Ansteuerung, wobei die manuelle Ansteuerung über eine Kurvenscheibe erfolgt, mit der jeweils ein Stößel des ersten und des zweiten Ventils bewegt wird.

Es besteht somit ein Bedarf für eine Ventileinrichtung, die eine elektropneumatische und eine manuelle Steuerung aufweist, sowie eine RTR-Funktion, und die kostengünstig aufgebaut ist.

Aufgabe der Erfindung ist es daher, eine derartige Ventileinrichtung, sowie ein Lastkraftfahrzeug mit einer derartigen Ventileinrichtung, anzugeben.

Diese Aufgabe wird durch eine Ventileinrichtung gemäß Anspruch 1 sowie ein Lastkraftfahrzeug gemäß Anspruch 14 gelöst.

Die abhängigen Ansprüche beinhalten vorteilhafte Weiterbildungen und Verbesserungen der Erfindung entsprechend der nachfolgenden Beschreibung dieser Maßnahmen.

Die Erfindung betrifft eine Ventileinrichtung, umfassend erstes Ventil und ein zweites Ventil. Das erste Ventil und das zweite Ventil können in einem Gehäuse angeordnet sein, wobei das Gehäuse einen Drucklufteinlass, einen Druckluftluftauslass und einen Entlüftungsauslass aufweisen kann. Jedes der Ventile weist einen Kolben auf, wobei der Kolben des ersten Ventils ein erstes Kontaktelement aufweist und der Kolben des zweiten Ventils ein zweites Kontaktelement aufweist. Zusätzlich kann jedes der Ventile eine Rückstellfeder für jeden Kolben aufweisen. Die Ventileinrichtung weist eine Grundstellung auf., Die Ventileinrichtung weist zur Betätigung der Ventile eine elektropneumatische Ansteuerung und eine mechanische Ansteuerung auf, die ein manuell betätigbares, insbesondere ein manuell drehbares Bedienelement aufweist. Die Ventileinrichtung weist auch ein Kurvenelement auf, das mit dem Bedienelement gekoppelt ist. Bei Betätigung des Bedienelements kann somit das Kurvenelement bewegt werden.

Bei einer Betätigung des Bedienelements in einer ersten Weise, wobei es sich insbesondere um eine Betätigung des Bedienelements in eine erste Drehrichtung handeln kann, wird durch das Kurvenelement über das erste Kontaktelement das erste Ventil betätigt. Bei einer Betätigung des Bedienelements in einer zweiten Weise, wobei es sich insbesondere um eine Betätigung des Bedienelements in eine zweite, der ersten Drehrichtung entgegengesetzte ("die andere") Drehrichtung handeln kann, wird durch das Kurvenelement über das zweite Kontaktelement das zweite Ventil betätigt. Dabei weist das Kurvenelement mindestens einen Rastpunkt auf, in den eines der Kontaktelemente bei einer der Drehbewegungen einrastet. Bei einer Betätigung der elektropneumatischen Ansteuerung findet ein Überhub statt, durch den die Raststellung gelöst wird und die Ventileinrichtung in die Grundstellung zurückkehrt. Diese Betätigung der elektropneumatischen Ansteuerung löst damit eine RTR-Funktion aus.

In dieser Weise ist nicht gemäß dem Stand der Technik ein zusätzlicher Kolben nur zur Bereitstellung der RTR-Funktion erforderlich, sondern kann diese unter vorteilhafter Nutzung anderer, bereits vorhandener Ventilbauteile verwirklicht werden.

Gemäß der Erfindung ist eine Welle mit dem Bedienelement und dem Kurvenelement gekoppelt. Die Welle dient somit der Übertragung einer durch die Betätigung des Bedienelements ausgelösten Bewegung auf das Kurvenelement. Die Kontaktelemente und die Kolben sind parallel zu einer durch die Welle definierten Achse verschiebbar angeordnet unr und das Kurvenelement ist rechtwinklig verschiebbar zu der durch die Welle definierten Achse angeordnet.

In einer Ausführungsform der Erfindung weist die Ventileinrichtung eine Feder auf, die angeordnet ist, um das Kurvenelement in eine Grundstellung des Kurvenelements zu bewegen, die der Grundstellung der Ventileinrichtung entspricht.

Insbesondere kann das Kurvenelement als Kurvenscheibe ausgebildet sein.

Das Kurvenelement kann eine Kurvenbahn aufweisen, in der der Rastpunkt angeordnet ist. Der Rastpunkt kann beispielsweise als eine Vertiefung oder Ausnehmung in der Kurvenbahn ausgeführt sein.

Nach einer Ausführungsform der Erfindung ist eines der Kontaktelemente oder sind beide oder alle Kontaktelemente als Teil des jeweiligen Kolbens ausgebildet, etwa als einstückiger oder angesetzter Fortsatz des Kolbens. Alternativ kann eines der Kontaktelemente, beide oder alle der Kontaktelemente auch separat von dem jeweiligen Kolben ausgebildet sein, beispielsweise als ein Stößel, der mit dem Kolben beispielsweise formschlüssig oder in anderer Weise zur Übertragung einer Translationsbewegung des Kolbens auf den Stößel verbunden ist. Eine solche Übertragung der Translationsbewegung von dem Kolben auf den Stößel kann auch dadurch gegeben sein, dass der Kolben und der Stößel lediglich in Oberflächenkontakt stehen und beispielsweise durch die Schwerkraft oder die Wirkung einer Feder in diesem Oberflächenkontakt gehalten werden.

In einer weiteren vorteilhaften Ausführungsform sind das erste Ventil für einen Belüftungsvorgang und das zweite Ventil für einen Entlüftungsvorgang ausgestaltet, wobei die Ventileinrichtung in der Grundstellung keinen Durchfluss aufweist.

In einer weiteren vorteilhaften Ausführungsform ist das erste Ventil ein 4/2-Ventil und das zweite Ventil ein 4/2- oder ein 3/2-Ventil.

In einem weiteren bevorzugten Ausführungsbeispiel wird nach einer Betätigung des Bedienelements in einer der Weisen, beispielsweise in eine der Drehrichtungen, eines der Ventile betätigt, wobei das für dieses Ventil angeordnete Kontaktelement bei dieser Betätigung in den Rastpunkt einrastet, und wobei bei einer Betätigung der elektropneumatischen Ansteuerung für dieses Ventil ein Überhub des Kolbens dieses Ventils stattfindet, durch den die Raststellung dieses Kontaktelements gelöst wird und die Ventileinrichtung in die Grundstellung zurückkehrt.

In einer vorteilhaften Ausführungsform des Ausführungsbeispiels sind das erste Ventil für einen Belüftungsvorgang und das zweite Ventil für einen Entlüftungsvorgang ausgestaltet, wobei die Ventileinrichtung in der Grundstellung den Druckluftluftauslass mit einem Luftfederventil verbindet. Es ist möglich, dass in einer Zwischenstellung, die zwischen der Grundstellung und einer Belüftungsstellung bzw. einer Entlüftungsstellung eine Stoppstellung angeordnet ist, der Druckluftauslass abgesperrt wird.

Das erste Ventil kann ein 5/2-Ventil und das zweite Ventil ein 4/2- oder ein 3/2-Ventil sein. Dabei kann das Kurvenelement eine Kurvenbahn aufweisen, in der der Rastpunkt angeordnet ist.

In einem weiteren bevorzugten Ausführungsbeispiel sind die Welle und das Kurvenelement fest mit dem Bedienelement verbunden. Die Feder kann eine Drehfeder sein, die mit dem Kurvenelement gekoppelt ist und die angeordnet ist, um das Kurvenelement in seine Grundstellung zu bewegen, die der Grundstellung der Ventileinrichtung entspricht.

In einer weiteren vorteilhaften Ausführungsform weist die elektropneumatische Ansteuerung für jedes der Ventile ein Magnetventil zur Steuerung einer Druckluftzufuhr für die Ventile auf.

Die Ventileinrichtung gemäß der Erfindung ist vorteilhafterweise für ein Fahrzeug, insbesondere ein Nutzfahrzeug, insbesondere ein Lastkraftfahrzeug, insbesondere ein Anhängefahrzeug, mit einer Luftfederungseinrichtung verwendbar.

Ausführungsbeispiele der Erfindung sind in den Zeichnungen schematisch dargestellt und werden nachfolgend anhand der Figuren näher erläutert.

Es zeigen:
- Fig. 1: ein erstes Ausführungsbeispiel der Ventileinrichtung in einer Grundstellung;
- Fig. 2: die Ventileinrichtung der Fig. 1 in einer Senken-Stellung;
- Fig. 3: die Ventileinrichtung der Fig. 1 in einer Heben-Stellung;
- Fig. 4: die Ventileinrichtung der Fig. 1 in einer RTR-Stellung;
- Fig. 5: ein zweites Ausführungsbeispiel der Ventileinrichtung in einer Grundstellung;
- Fig. 6: die Ventileinrichtung der Fig. 5 in einer ersten Stopp-Stellung;
- Fig. 7: die Ventileinrichtung der Fig. 5 in einer Senken-Stellung;
- Fig. 8: die Ventileinrichtung der Fig. 5 in einer zweiten Stopp-Stellung;
- Fig. 9: die Ventileinrichtung der Fig. 5 in einer Heben-Stellung;
- Fig. 10: die Ventileinrichtung der Fig. 5 in einer RTR-Stellung;
- Fig. 11: ein drittes Ausführungsbeispiel der Ventileinrichtung in einem Querschnitt, welches nicht von der Erfindung abgedeckt ist;
- Fig. 12: die Ventileinrichtung der Fig. 11 in einer Heben-Stellung;
- Fig. 13: die Ventileinrichtung der Fig. 11 in einer Rast-Stellung; und
- Fig. 14: die Ventileinrichtung der Fig. 11 in einer RTR-Stellung.

Die vorliegende Beschreibung veranschaulicht die Prinzipien der erfindungsgemäßen Offenbarung. Es versteht sich somit, dass Fachleute in der Lage sein werden, verschiedene Anordnungen zu konzipieren, die zwar hier nicht explizit beschrieben werden, die aber Prinzipien der erfindungsgemäßen Offenbarung verkörpern und in ihrem Umfang ebenfalls geschützt sein sollen.

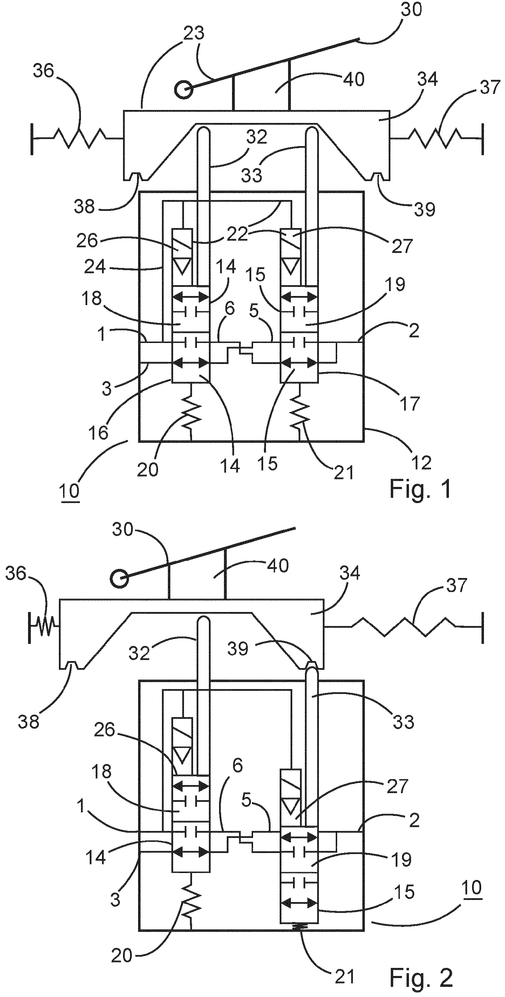

Fig. 1 zeigt schematisch eine Ventileinrichtung 10 mit einem Gehäuse 12, in dem ein erstes Ventil 14 und ein zweites Ventil 15 angeordnet sind, und das einen Drucklufteinlass 1 für eine Druckluftzufuhr, einen Druckluftauslass 2 und einen Entlüftungsauslass 3 aufweist. Das erste Ventil 14 ist insbesondere ein Belüftungsventil und weist einen Anschluss auf, der mit dem Drucklufteinlass 1 verbunden ist, und einen Anschluss, der mit dem Entlüftungsauslass 3 verbunden ist. Das zweite Ventil 15 ist insbesondere ein Entlüftungsventil und weist zwei Anschlüsse auf, die über zwei pneumatische Verbindungen 5, 6 innerhalb der Ventileinrichtung 10 mit zwei Anschlüssen des Ventils 14 verbunden sind, und zwei Anschlüsse, die mit dem Druckluftauslass 2 verbunden sind. Die pneumatischen Verbindungen 5, 6 und die Anschlüsse der Ventile 14, 15 sind insbesondere derart ausgestaltet, dass bei Betätigung des Ventils 14 Druckluft vom Drucklufteinlass 1 durch die Ventile 14, 15 zum Druckluftauslass 2 durchgeleitet wird und bei Betätigung des Ventils 15 Druckluft vom Druckluftluftauslass 2 durch die Ventile 14, 15 zum Entlüftungsauslass 3 durchgeleitet wird. In einer Grundstellung der Ventilanordnung 10, wenn keines der Ventile 14, 15 betätigt wird, findet kein Durchfluss durch die Ventilanordnung 10 statt.

Die beiden Ventile 14, 15 sind in diesem Ausführungsbeispiel 4/2-Ventile und weisen jeweils einen Kolben 18 bzw. 19 auf, in der Fig. 1 nur schematisch dargestellt, mit jeweils einer Rückstellfeder 20 bzw. 21, und ein Ventilgehäuse 16 bzw. 17, in denen sich die Kolben 18 bzw. 19, bewegen. Das Ventil 15 kann alternativ aber auch als ein 3/2-Ventil mit nur einem Anschluss für den Druckluftluftauslass 2 ausgestaltet sein.

Das Ventil 14 ist hierbei derart ausgestaltet, dass es in einer Grundstellung, wenn es nicht betätigt wird, eine Entlüftung durch die Ventile 14 und 15 ermöglicht und bei einer Betätigung des Ventils 14 eine Belüftung über die Ventile 14 und 15 ermöglicht. Das Ventil 15 ist derart ausgestaltet, dass es in einer Grundstellung, wenn es nicht betätigt wird, eine Belüftung durch die Ventile 14 und 15 ermöglicht und bei einer Betätigung des Ventils 15 eine Entlüftung über die Ventile 14 und 15 ermöglicht.

Eine Ventileinrichtung dieser Art ist beispielsweise für eine Luftfederungsanlage eines Fahrzeugaufbaus eines Kraftfahrzeugs verwendbar. Wird das Ventil 14 betätigt und hierdurch dessen Kolben 18 verschoben, so wird über die Anschlüsse 1 und 2 ein Druck aufgebaut zum Heben des Fahrzeugaufbaus. Wird das Ventil 15 betätigt und dessen Kolben 19 verschoben, so wird über die Anschlüsse 2 und 3 Druck abgelassen zum Senken des Fahrzeugaufbaus. Wird keines der Ventile 14, 15 betätigt, so wird der Druck an dem Druckluftauslass 2 aufrechterhalten.

Zur Betätigung des Kolbens weist jedes der Ventile 14, 15 zur Steuerung einer Druckluftzufuhr oder einer Entlüftung sowohl eine elektropneumatische Ansteuerung 22 als auch eine manuelle Ansteuerung 23 auf. Die elektropneumatische Ansteuerung 22 weist für das Ventil 14 hierbei ein Magnetventil 26 und für das Ventil 15 ein Magnetventil 27 auf, die über eine pneumatische Leitung 24 mit dem Drucklufteinlass 1 verbunden sind. Die Magnetventile 26, 27 können beispielsweise durch ein Steuergerät, in der Fig. 1 nicht dargestellt, betätigt werden. Wird das Magnetventil 26 betätigt, so wird durch eine Verschiebung des Kolbens 18 ein Belüftungsvorgang bewirkt, und wird das Magnetventil 27 betätigt, so wird durch eine Verschiebung des Kolbens 19 ein Entlüftungsvorgang bewirkt.

Die manuelle Ansteuerung 23 weist ein manuelles Bedienelement, beispielsweise einen Hebel 30 auf, sowie ein Kontaktelement 32 für das Ventil 14 und ein Kontaktelement 33 für das Ventil 15, wobei die Kontaktelemente 32, 33 als Teile der Kolben 18, 19 ausgebildet sind. Zur Betätigung der Kontaktelemente 32, 33 enthält die manuelle Ansteuerung 23 einen Drehmechanismus mit einem Kurvenelement 34, hier ausgestaltet als eine Kurvenscheibe 34, die derart ausgestaltet ist, dass bei einer Drehung des Hebels 30 in eine Drehrichtung das Kontaktelement 32 den Kolben 18 verschiebt für einen Belüftungsvorgang, und bei einer Drehung des Hebels in die andere Drehrichtung das Kontaktelement 33 den Kolben 19 verschiebt für einen Entlüftungsvorgang.

Der Hebel 30 ist über eine Welle 40 mit der Kurvenscheibe 34 gekoppelt, über die bei einer Betätigung des Hebels 30 das Kontaktelement 32 bzw. 33, verschoben wird. Hierbei wird bei einer Drehung des Hebels 30 beispielsweise im Uhrzeigersinn das Kontaktelement 32 verschoben, so dass durch eine Verschiebung des Kolbens 18 ein Belüftungsvorgang stattfindet, und bei einer Drehung des Hebels 30 gegen den Uhrzeigersinn das Kontaktelement 33 verschoben, so dass durch eine Verschiebung des Kolbens 19 ein Entlüftungsvorgang stattfindet. Die Kurvenscheibe 34 weist hierfür eine Kurvenbahn auf, über die bei einer Drehung im Uhrzeigersinn das Kontaktelement 32 verschoben wird, und eine Kurvenbahn, über die bei einer Drehung gegen den Uhrzeigersinn das Kontaktelement 33 verschoben wird.

Die Kurvenscheibe 34 ist beweglich innerhalb des Gehäuses 12 angeordnet, zwischen zwei Federn 36, 37, die versuchen, die Kurvenscheibe 34 in eine Grundstellung zurückzuschieben, die der Grundstellung der Ventileinrichtung 10 entspricht. Bei einer Drehung des Hebels 30 beispielsweise im Uhrzeigersinn wird hierbei die Kurvenscheibe 34 in Richtung der Feder 37 geschoben und bei einer Drehung des Hebels 30 gegen den Uhrzeigersinn wird die Kurvenscheibe 34 in Richtung der Feder 36 geschoben. Die Federn 36, 37 sind in diesem Ausführungsbeispiel Schraubenfedern, die sowohl zusammengedrückt als auch auseinandergezogen werden können. Anstatt zweier Federn 36, 37 kann beispielsweise aber auch nur eine einzige Feder verwendet werden.

Die Kurvenscheibe 34 weist zudem zwei Rastpunkte 38, 39 auf, derart, dass bei einer Drehung des Hebels 30 im Uhrzeigersinn am Ende der Drehung, bei einem Belüftungsvorgang, das Kontaktelement 32 in den Rastpunkt 38 einrastet und bei einer Drehung des Hebels 30 gegen den Uhrzeigersinn am Ende der Drehung, bei einem Entlüftungsvorgang, das Kontaktelement 33 in den Rastpunkt 39 einrastet. Die Rastpunkte 38, 39 sind beispielsweise Vertiefungen in der Kurvenbahn der Kurvenscheibe, wobei das Kontaktelement 32 in die Vertiefung des Rastpunkts 38 durch die Federkraft der Rückstellfeder 20 gedrückt wird, wenn sich das Kontaktelement 32 über dem Rastpunkt 38 befindet, und das Kontaktelement 33 in die Vertiefung des Rastpunkts 39 durch die Federkraft der Rückstellfeder 21 gedrückt wird, wenn sich das Kontaktelement 33 über dem Rastpunkt 39 befindet.

Die in der Figur 1 dargestellte Stellung der Ventile 14, 15 entspricht einer Grundstellung der Ventilanordnung 10, in der kein Durchfluss durch die Ventilanordnung 10 stattfindet. Diese Stellung ist beispielsweise für eine Fahrtstellung eines Kraftfahrzeugs oder für eine Stopp-Stellung nach einem Belüftungsvorgang oder einem Entlüftungsvorgang eines Fahrzeugaufbaus eines Kraftfahrzeugs verwendbar.

Die möglichen Funktionen der Ventileinrichtung 10 werden nun anhand der Figuren 2-4 näher erläutert. Für einen Entlüftungsvorgang wird der Hebel 30 beispielsweise gegen den Uhrzeigersinn gedreht, so dass die Kurvenscheibe 34 durch die Welle 40 gedreht wird und sich durch die Kurvenbahn gleichzeitig in Richtung der Druckfeder 36 bewegt, bis das Kontaktelement 33 in den Rastpunkt 39 einrastet, wie in der Fig. 2 dargestellt. Die Feder 36 ist hierdurch zusammengedrückt und die Feder 37 auseinandergezogen. Der Druckluftauslass 2 ist hierdurch über die zwei Ventile 14, 15 und die pneumatische Verbindung 5 mit dem Entlüftungsauslass 3 verbunden. Dies entspricht einer Senken-Stellung.

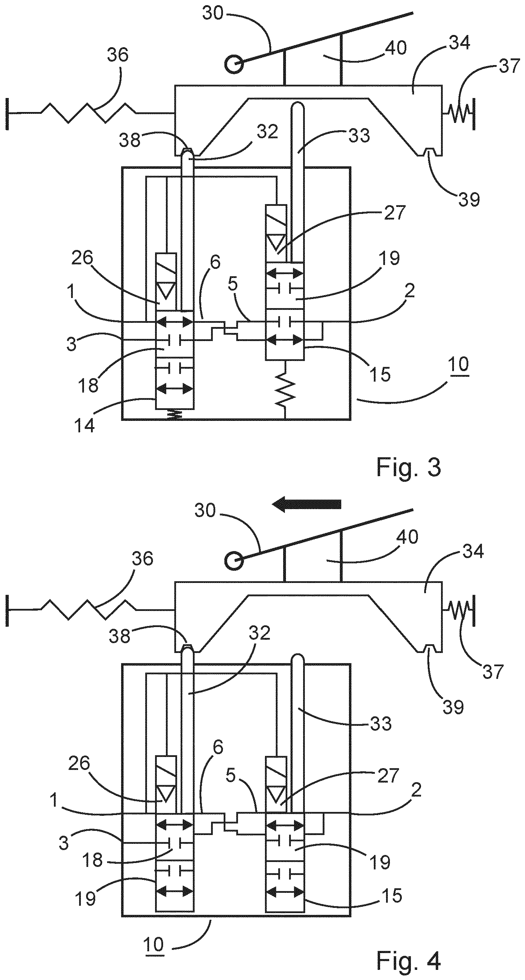

Für einen Belüftungsvorgang wird der Hebel 30 im Uhrzeigersinn gedreht, so dass die Kurvenscheibe 34 durch die Welle 40 gedreht wird und sich durch die Kurvenbahn gleichzeitig in Richtung der Feder 37 bewegt, bis das Kontaktelement 32 in den Rastpunkt 38 einrastet, wie in der Fig. 3 dargestellt. Die Feder 37 ist deshalb zusammengedrückt und die Feder 36 auseinandergezogen. Der Drucklufteinlass 1 ist hierdurch über die zwei Ventile 14, 15 und die pneumatische Verbindung 6 mit dem Druckluftauslass 2 verbunden. Dies entspricht einer Heben-Stellung.

Soll nun nach dem in der Fig. 3 dargestellten Belüftungsvorgang die Ventilanordnung 10 wieder zurück in ihre Grundstellung gebracht werden, so wird das Magnetventil 26 betätigt. Hierdurch entsteht ein Überhub für den Kolben 18, so dass das Kontaktelement 32 aus dem Rastpunkt 38 ausrastet, wie in der Fig. 4 dargestellt. Hierdurch wird die Kurvenscheibe 34 durch die Federn 36, 37 zurück in ihre Grundstellung geschoben. Das Betätigen des Magnetventils 26, wenn die Ventilanordnung 10 in der Heben-Stellung ist, entspricht also einer RTR- (Return-to-Ride) Funktion, durch die die Ventilanordnung 10 in die Grundstellung, bzw. eine Fahrtstellung, umschaltet.

Die RTR-Funktion kann ebenfalls nach einem Entlüftungsvorgang der Ventilanordnung 10, wenn das Kontaktelement 33 in den Rastpunkt 39 einrastet ist, wie in der Fig. 2 dargestellt, verwendet werden. Hierfür wird das Magnetventil 27 betätigt, so dass ein Überhub für den Kolben 19 entsteht und das Kontaktelement 33 aus dem Rastpunkt 39 ausrastet. Hierdurch wird die Kurvenscheibe 34 wieder durch die Federn 36, 37 zurück in ihre Grundstellung geschoben.

Die RTR-Funktion kann alternativ auch durch ein gleichzeitiges Betätigen der beiden Magnetventile 26, 27 ausgelöst werden. Hierdurch wird für beide Kolben 18, 19 ein Überhub ausgelöst. So kann die Ventileinrichtung 10 durch ein einziges Steuersignal für die Magnetventile 26, 27 immer in die Grundstellung zurückgeführt werden, unabhängig davon, ob sich die Ventileinrichtung 10 in der Heben-Stellung oder in der Senken-Stellung befindet. Die Ventileinrichtung 10 benötigt daher keine zusätzlichen Mittel, um die Ventileinrichtung 10 aus einer eingerasteten Heben-Stellung oder Senken-Stellung in die Grundstellung zurückzuführen.

Die Ventileinrichtung 10 kann insbesondere zum Heben oder Senken eines Fahrzeugaufbaus eines Lastkraftwagens verwendet werden, wobei die Ventileinrichtung 10 einen Rastpunkt für die Heben-Stellung oder einen für die Senken-Stellung oder jeweils einen für jede der zwei Stellungen aufweisen kann. Eine gewünschte Höhe des Fahrzeugaufbaus kann hierbei sowohl manuell über den Hebel 30 eingestellt werden als auch durch die elektropneumatische Ansteuerung 22. Der Fahrzeugaufbau kann beispielsweise im Stand des Lastkraftwagens durch den Rastpunkt 39 in der Senken-Stellung gesichert werden. Soll der Lastkraftwagen anschließend gefahren werden, so kann der Fahrzeugaufbau durch die elektropneumatische Ansteuerung in die Grundstellung gebracht werden, die der Fahrtstellung entspricht, ohne dass die Ventileinrichtung 10 manuell betätigt werden muss. Während der Fahrt kann dann ein elektronisches Steuergerät bei diesem Ausführungsbeispiel den Fahrzeugaufbau des Lastkraftwagens durch eine entsprechende Bestätigung der elektropneumatischen Ansteuerung 22 ausregeln.

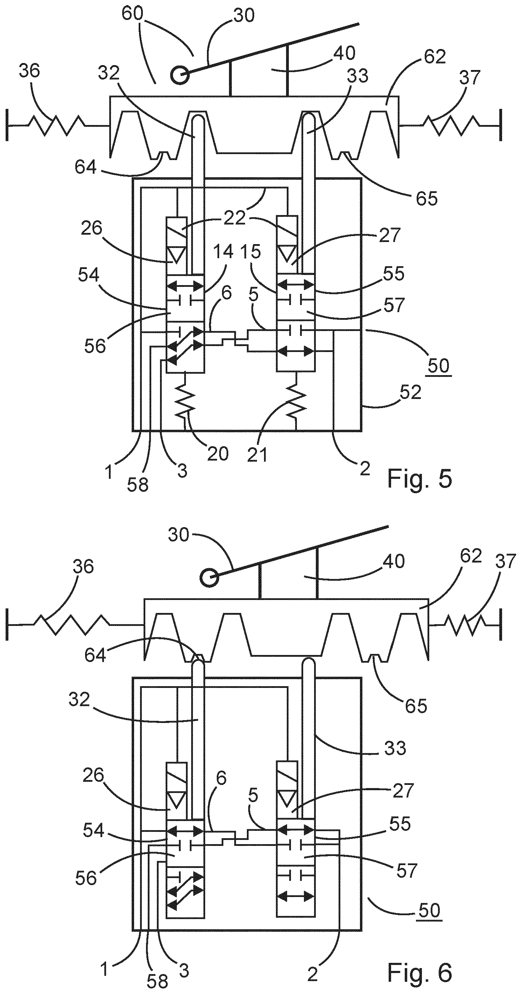

Ein weiteres Ausführungsbeispiel der Erfindung, Ventileinrichtung 50, ist in der Fig. 5 dargestellt. Die Ventileinrichtung 50 weist ein Gehäuse 52 auf, in dem ein erstes Ventil 54 mit einem Kolben 56 und ein zweites Ventil 55 mit einem Kolben 57 angeordnet sind, und das einen Drucklufteinlass 1 für eine Druckluftzufuhr, einen Druckluftauslass 2 und einen Entlüftungsauslass 3 aufweist, sowie einen Luftfederventilanschluss 58 für ein Luftfederventil.

Das erste Ventil 54 ist insbesondere ein Belüftungsventil und weist einen Anschluss auf, der mit dem Drucklufteinlass 1 verbunden ist, einen Anschluss, der mit dem Entlüftungsauslass 3 verbunden ist, sowie einen Anschluss, der mit dem Luftfederventilanschluss 58 verbunden ist. Das zweite Ventil 55 ist insbesondere ein Entlüftungsventil und weist zwei Anschlüsse auf, die über zwei pneumatische Verbindungen 5, 6 innerhalb der Ventileinrichtung 50 mit zwei Anschlüssen des Ventils 54 verbunden sind, und zwei Anschlüsse, die mit dem Druckluftauslass 2 verbunden sind. Für die weiteren Komponenten der Ventileinrichtung 50, die der Ventileinrichtung 10 entsprechen, wurden gleiche Bezugszeichen verwendet.

Die pneumatischen Verbindungen 5, 6 und die Anschlüsse der Ventile 54, 55 sind insbesondere derart ausgestaltet, dass bei einer Betätigung des Ventils 54 Druckluft vom Drucklufteinlass 1 durch die Ventile 54, 55 zum Druckluftauslass 2 durchgeleitet wird und bei einer Betätigung des Ventils 55 Druckluft vom Druckluftluftauslass 2 durch die Ventile 54, 55 zum Entlüftungsauslass 3 durchgeleitet wird. In einer Grundstellung der Ventilanordnung 50, wenn keines der Ventile 54, 55 betätigt wird, ist der Druckluftluftauslass 2 mit dem Luftfederventilanschluss 58 verbunden. Dies entspricht einer Fahrtstellung.

Zur Betätigung der Kolben 56 bzw. 57, weist jedes der Ventile 54, 55 zur Steuerung einer Druckluftzufuhr oder einer Entlüftung sowohl eine elektropneumatische Ansteuerung 22 als auch eine manuelle Betätigung 60 auf. Die elektropneumatische Ansteuerung 22 entspricht hierbei der aus Fig. 1 bis Fig. 4.

Das Ventil 54 ist in diesem Ausführungsbeispiel ein 5/2-Ventil und das Ventil 55 ist ein 4/2-Ventil, das dem Ventil 15 aus Fig. 1 bis Fig. 4 entspricht. In der Grundstellung des Ventils 54, wenn weder eine elektropneumatische Ansteuerung 22 noch eine manuelle Betätigung 60 stattfindet, ist durch das Ventil 54 sowohl der Luftfederventilanschluss 58 als auch der Druckluftauslass 3 über die pneumatischen Verbindungen 5, 6 mit dem Ventil 55 verbunden.

Die manuelle Betätigung 60 weist ein manuelles Bedienelement auf, beispielsweise einen Hebel 30, sowie ein Kontaktelement 32 für das Ventil 54 und ein Kontaktelement 33 für das Ventil 55. Zur Betätigung der Kontaktelemente 32, 33 enthält die manuelle Betätigung 60 einen Drehmechanismus mit einem Kurvenelement 62, hier ausgestaltet als eine Kurvenscheibe 62. Der Hebel 30 ist hierbei über eine Welle 40 mit der Kurvenscheibe 62 gekoppelt, die eine Kurvenbahn aufweist, derart, dass bei einer Betätigung des Hebels 30 das Kontaktelement 32 und/oder das Kontaktelement 33 verschoben werden.

Die Kurvenscheibe 62 ist beweglich innerhalb des Gehäuses 52 angeordnet, zwischen zwei Federn 36, 37, die versuchen, die Kurvenscheibe 34 in eine Grundstellung zurückzuschieben, die der Fahrtstellung der Ventileinrichtung 50 entspricht. Bei einer Drehung des Hebels 30 beispielsweise im Uhrzeigersinn wird hierbei die Kurvenscheibe 34 in Richtung der Feder 37 geschoben und bei einer Drehung des Hebels 30 gegen den Uhrzeigersinn wird die Kurvenscheibe 34 in Richtung der Feder 36 geschoben. Die Federn 36, 37 sind beispielsweise Schraubenfedern, die sowohl die Funktion einer Druckfeder und/oder einer Zugfeder haben können.

Die Kurvenbahn der Kurvenscheibe 62 ist derart ausgestaltet, dass bei einer Drehung des Hebels 30 in eine erste Drehrichtung zuerst eine Stopp-Stellung erreicht wird, in der durch die Kurvenscheibe 62 beide Kontaktelemente 32, 33 verschoben sind, und wobei die Kurvenscheibe 62 mindestens einen Rastpunkt 64 aufweist, in den eines der Kontaktelemente, in diesem Ausführungsbeispiel das Kontaktelement 32, einrastet, Fig. 6. In dieser Stopp-Stellung findet kein Durchfluss durch die Ventileinrichtung 50 statt.

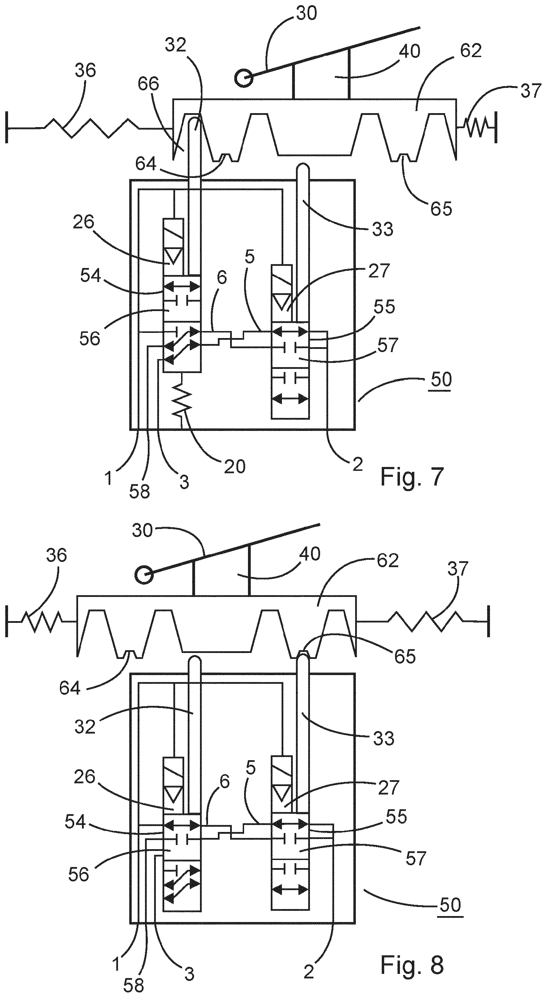

Bei einer weiteren Drehung des Hebels 30 in die erste Drehrichtung wird eine Senken-Stellung erreicht, in der durch die Kurvenscheibe 62 das Kontaktelement 33 verschoben ist, jedoch nicht das Kontaktelement 32, Fig. 7. In dieser Senken-Stellung ist der Druckluftauslass 2 über die zwei Ventile 54, 55 und die pneumatische Verbindung 5 mit dem Entlüftungsauslass 3 verbunden.

Bei einer Drehung des Hebels 30 in die andere Drehrichtung wird ebenfalls zuerst eine Stopp-Stellung erreicht, in der durch die Kurvenscheibe 62 beide Kontaktelemente 32, 33 verschoben sind, und wobei die Kurvenscheibe 62 mindestens einen zweiten Rastpunkt 65 aufweist, in den eines der Kontaktelemente, in diesem Ausführungsbeispiel das Kontaktelement 33, einrastet, Fig. 8. In dieser Stopp-Stellung findet ebenfalls kein Durchfluss durch die Ventileinrichtung 50 statt.

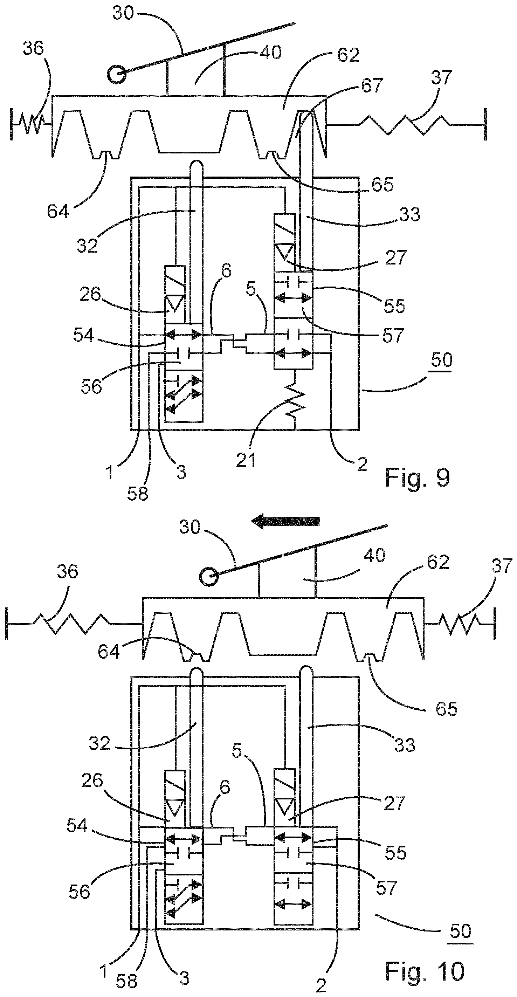

Bei einer weiteren Drehung des Hebels 30 in die zweite Drehrichtung wird eine Heben-Stellung erreicht, in der durch die Kurvenscheibe 62 das Kontaktelement 32 verschoben ist, jedoch nicht das Kontaktelement 33, Fig. 9. In dieser Heben-Stellung ist der Drucklufteinlass 1 über die zwei Ventile 54, 55 und die pneumatische Verbindung 6 mit dem Druckluftauslass 2 verbunden.

Die Funktionen der Ventileinrichtung 50 werden nun anhand der Figuren 6-10 näher erläutert. Um eine der Stoppstellungen der Ventileinrichtung 50 einzustellen, wird der Hebel 30 in die erste Drehrichtung gedreht, so dass die Kurvenscheibe 34 über die Welle 40 gedreht wird und sich durch die Kurvenbahn gleichzeitig in Richtung der Druckfeder 37 bewegt, wie in der Fig. 6 dargestellt. Die Kurvenscheibe 62 ist hierbei derart ausgebildet, dass in dieser Stellung beide Kolben 56, 57 der Ventile 54, 55 durch die Kontaktelemente 32 bzw. 33, verschoben sind, so dass durch die Ventileinrichtung 50 kein Durchfluss stattfindet. Da in dieser Stellung das Kontaktelement 32 in den Rastpunkt 64 einrastet, verbleibt die Ventileinrichtung 50 in dieser Stellung.

Um die Senken-Stellung an der Ventileinrichtung 50 einzustellen, wird der Hebel 30 in die erste Drehrichtung über die Stopp-Stellung der Fig. 6 hinaus gedreht, wie in der Fig. 7 dargestellt, so dass sich die Kurvenscheibe 34 durch die Kurvenbahn weiter in Richtung der Druckfeder 37 bewegt, bis die Kurvenbahn der Kurvenscheibe 34 eine Vertiefung 66 erreicht, in die das Kontaktelement 32 durch die Rückstellfeder 20 geschoben wird. Der Kolben 57 des Ventils 55 ist hierbei in dieser Stellung weiterhin durch das Kontaktelement 33 verschoben. Dies entspricht der Grundstellung des Ventils 54. Der Druckluftauslass 2 ist hierdurch über die zwei Ventile 54, 55 und die pneumatische Verbindung 5 mit dem Entlüftungsauslass 3 verbunden, so dass ein Entlüftungsvorgang stattfindet.

Eine Stopp-Stellung wird ebenfalls erreicht, wenn die Ventileinrichtung 50 in die andere Drehrichtung gedreht wird, wie in der Fig. 8 dargestellt. Durch die Drehung des Hebels 30 in die zweite Drehrichtung bewegt sich die Kurvenscheibe 34 durch die Kurvenbahn in Richtung der Druckfeder 36. Die Kurvenscheibe 62 ist hierbei derart ausgebildet, dass in dieser Stellung beide Kolben 56, 57 der Ventile 54, 55 durch die Kontaktelemente 32 bzw. 33, verschoben sind, so dass kein Durchfluss durch die Ventileinrichtung 50 stattfindet. Da in dieser Stellung das Kontaktelement 33 in den Rastpunkt 65 einrastet, verbleibt die Ventileinrichtung 50 in dieser Stopp-Stellung.

Um die Heben-Stellung an der Ventileinrichtung 50 einzustellen, wird der Hebel 30 in die zweite Drehrichtung über die Stopp-Stellung der Fig. 8 hinaus gedreht, wie in der Fig. 9 dargestellt, so dass sich die Kurvenscheibe 34 durch die Kurvenbahn weiter in Richtung der Druckfeder 36 bewegt, bis das Kontaktelement 33 auf der Kurvenbahn der Kurvenscheibe 34 eine Vertiefung 67 erreicht, in die das Kontaktelement 33 durch die Rückstellfeder 21 geschoben wird. Der Kolben 56 des Ventils 54 ist hierbei in dieser Stellung weiterhin durch das Kontaktelement 32 verschoben. Dies entspricht der Grundstellung des Ventils 55. Der Druckluftauslass 2 ist hierdurch über die zwei Ventile 54, 55 und die pneumatische Verbindung 6 mit dem Drucklufteinlass 1 verbunden, so dass ein Belüftungsvorgang stattfindet.

Soll die Ventilanordnung 50 aus in der Fig. 6 dargestellten Stopp-Stellung zurück in die Grundstellung gebracht werden, die der Fahrt-Stellung der Ventilanordnung 50 entspricht, so wird das Magnetventil 26 betätigt, wie in der Fig. 10 dargestellt. Hierdurch entsteht ein Überhub für den Kolben 56, so dass das Kontaktelement 32 aus dem Rastpunkt 64 ausrastet. Hierdurch wird die Kurvenscheibe 34 durch die Federn 36, 37 in ihre Grundstellung geschoben. Das Betätigen des Magnetventils 26, wenn die Ventilanordnung 50 in der Stopp-Stellung ist, entspricht also einer RTR-Funktion, durch die die Ventilanordnung 50 in die Fahrtstellung umschaltet.

Die RTR-Funktion kann ebenfalls bei der in der Fig. 8 dargestellten StoppStellung der Ventilanordnung 50, wenn das Kontaktelement 33 in den Rastpunkt 65 eingerastet ist, verwendet werden. Hierfür wird das Magnetventil 27 betätigt, so dass ein Überhub für den Kolben 57 entsteht und das Kontaktelement 33 aus dem Rastpunkt 65 ausrastet. Hierdurch wird die Kurvenscheibe 34 wieder durch die Federn 36, 37 in ihre Grundstellung geschoben.

Die RTR-Funktion kann alternativ auch durch ein gleichzeitiges Betätigen der beiden Magnetventile 26, 27 ausgelöst werden. Hierdurch wird für beide Kolben 56, 57 der Ventile 54, 55 ein Überhub ausgelöst. So kann die Ventileinrichtung 50 durch ein einziges Steuersignal für die Magnetventile 26, 27 immer in die Grundstellung zurückgeführt werden, unabhängig davon, in welcher StoppStellung sich die Ventileinrichtung 50 befindet. Die Ventileinrichtung 50 benötigt daher keine zusätzlichen Mittel, um die Ventileinrichtung 50 aus einer eingerasteten Stopp-Stellung in die Grundstellung zurückzuführen, und ermöglicht daher einen kostengünstigen Aufbau.

Die Ventileinrichtung 50 ist insbesondere für eine manuell geregelte Luftfederungsanlage eines Lastkraftwagens, insbesondere eines Fahrzeugaufbaus eines Lastkraftwagens, verwendbar. Die Grundstellung der Ventileinrichtung 50 ist hierbei die Fahrt-Stellung. Wird mit dem Hebel 30 das Ventil 54 betätigt und hierdurch dessen Kolben 56 verschoben, so wird über die Anschlüsse 1 und 2 ein Druck für eine Luftfederung aufgebaut. Wird das Ventil 55 betätigt und dessen Kolben 57 verschoben, so wird über die Anschlüsse 2 und 3 Druck abgelassen.

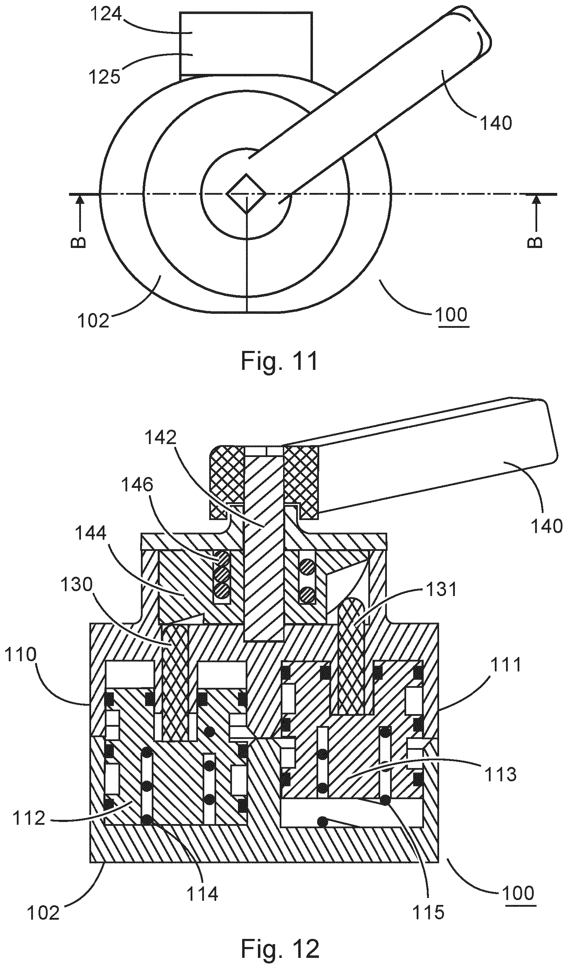

Ein weiteres Ausführungsbeispiel einer Ventileinrichtung ist in der Fig. 11 als Ventileinrichtung 100 in einer Aufsicht dargestellt. Die Ventileinrichtung 100 weist ein Gehäuse 102 und einen Hebel 140 auf, sowie eine elektropneumatische Ansteuerung mit Magnetventilen 124, 125, die an einer Seite des Gehäuses 120 der Ventileinrichtung 100 angeordnet sind. Die Magnetventile 124, 125 können beispielsweise durch ein elektronisches Steuergerät, in der Fig. 11 nicht dargestellt, betätigt werden.

Die Ventileinrichtung 100 der Fig. 11 ist in der Fig. 12 in einem Querschnitt durch eine Schnittachse B - B der Ventileinrichtung 100, Fig. 11, dargestellt. In dem Gehäuse 102 sind ein erstes Ventil 110 und ein zweites Ventil 111 angeordnet. Die Ventileinrichtung 100 weist weiterhin einen Drucklufteinlass für eine Druckluftzufuhr, einen Druckluftauslass und einen Entlüftungsauslass auf. Das erste Ventil 110 ist insbesondere ein Belüftungsventil und weist einen Anschluss auf, der mit dem Drucklufteinlass verbunden ist, und einen Anschluss, der mit dem Entlüftungsauslass verbunden ist. Das zweite Ventil 111 ist insbesondere ein Entlüftungsventil und weist zwei Anschlüsse auf, die über zwei pneumatische Verbindungen innerhalb der Ventileinrichtung 100 mit zwei Anschlüssen des Ventils 110 verbunden sind, und zwei Anschlüsse, die mit dem Druckluftauslass verbunden sind. Die pneumatischen Verbindungen und die Anschlüsse der Ventile 110, 111 sind insbesondere derart ausgestaltet, dass bei Betätigung des Ventils 110 Druckluft vom Drucklufteinlass durch die Ventile 110, 111 zum Druckluftauslass durchgeleitet wird und bei Betätigung des Ventils 111 Druckluft vom Druckluftluftauslass durch die Ventile 110, 111 zum Entlüftungsauslass durchgeleitet wird.

Das Ventil 110 ist hierbei derart ausgestaltet, dass es in einer Grundstellung, wenn es nicht betätigt wird, eine Entlüftung durch die Ventile 110 und 111 ermöglicht und bei einer Betätigung des Ventils 110 eine Belüftung über die Ventile 110 und 111 ermöglicht. Das Ventil 111 ist derart ausgestaltet, dass es in einer Grundstellung, wenn es nicht betätigt wird, eine Belüftung durch die Ventile 110 und 111 ermöglicht und bei einer Betätigung des Ventils 111 eine Entlüftung über die Ventile 110 und 111 ermöglicht. Werden beide Ventile 110, 111 betätigt, so findet kein Durchfluss statt.

Die beiden Ventile 110, 111 sind in diesem Ausführungsbeispiel 4/2-Ventile und weisen jeweils einen Kolben 112, bzw. 113 auf mit jeweils einer Rückstellfeder 114, bzw. 115. Das Ventil 111 kann alternativ aber auch als ein 3/2-Ventil mit nur einem Anschluss für den Druckluftluftauslass ausgestaltet sein.

Zur Betätigung des Kolbens weist jedes der Ventile 110, 111 zur Steuerung einer Druckluftzufuhr zusätzlich zu der elektropneumatischen Ansteuerung eine mechanische Betätigung auf. Die mechanische Betätigung weist ein manuelles Bedienelement, beispielsweise einen Hebel 140, auf, sowie ein Kontaktelement 130 für das Ventil 110 und ein Kontaktelement 131 für das Ventil 111. Zur Betätigung der Kontaktelemente 130, 131 weist die mechanische Betätigung zudem einen Drehmechanismus mit einer Welle 142, einer Kurvenscheibe 144 und einer Drehfeder 146 auf.

Die Kurvenscheibe 144 und der Hebel 140 sind an der Welle 142 befestigt und bei einer Betätigung des Hebels 140 wird durch die Kurvenscheibe 144 bei einer Drehung des Hebels 140 in eine Drehrichtung das Kontaktelement 130 und somit der Kolben 112 verschoben, und bei einer Drehung des Hebels 140 in die andere Drehrichtung wird durch die Kurvenscheibe das Kontaktelement 131 und somit der Kolben 113 verschoben. Hierbei wird eine Drehbewegung des Hebels 140 durch die Kurvenscheibe 144 in eine translatorische Bewegung umgesetzt. Die Kurvenscheibe 144 weist hierfür eine Fläche mit einer Kurvenbahn auf, über die bei einer Betätigung des Hebels 140 entweder das Kontaktelement 130 oder das Kontaktelement 131 verschoben wird. Die Betätigung des Hebels 140 in die eine Drehrichtung bewirkt hierbei einen Belüftungsvorgang und die Betätigung des Hebels 30 in die andere Drehrichtung bewirkt einen Entlüftungsvorgang. Die Drehfeder 146 bewirkt eine Kraft in Richtung der Grundstellung der Ventileinrichtung 100, in der auf keines der Kontaktelemente 130, 131 eine Kraft wirkt. Ist die Ventileinrichtung 100 in der Grundstellung, so wird der eingestellte Druck gehalten.

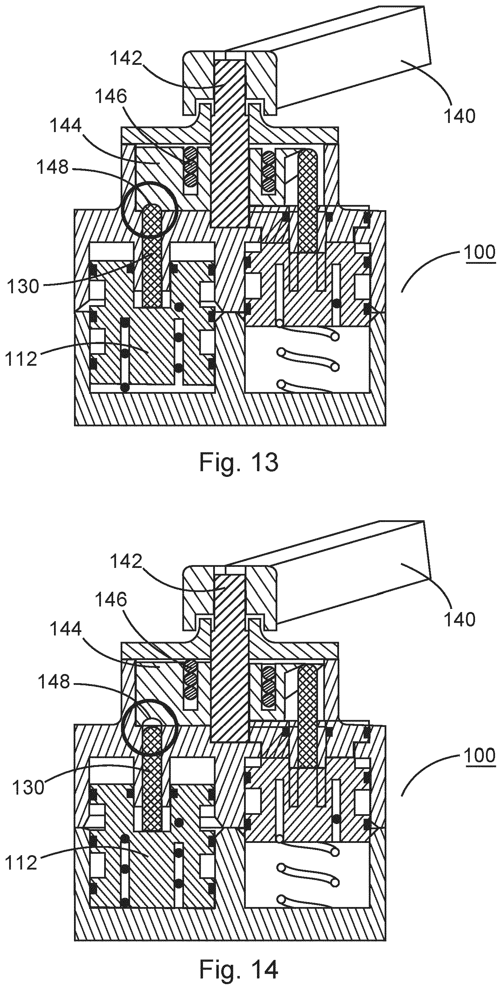

Bei der in der Figur 13 dargestellten Stellung der Ventileinrichtung 100 ist über den Hebel 140 eine Heben-Stellung der Ventileinrichtung 100 eingestellt, in der durch die Kurvenscheibe 144 das Kontaktelement 130 und hierdurch der Kolben 112 verschoben sind, so dass ein Belüftungsvorgang stattfindet. Hierbei ist das Kontaktelement 130 in einen Rastpunkt 148 eingerastet, wie in der Fig. 13 dargestellt.

Soll nun nach dem in der Fig. 13 dargestellten Belüftungsvorgang die Ventilanordnung 100 wieder zurück in ihre Grundstellung gebracht werden, so werden das dem Ventil 110 zugeordnete Magnetventil, beispielsweise Magnetventil 126, oder beide Magnetventile 126, 127 betätigt. Hierdurch entsteht ein Überhub für den Kolben 112, so dass das Kontaktelement 130 aus dem Rastpunkt 148 ausrastet, wie in der Fig. 14 dargestellt. Hierdurch wird die Kurvenscheibe 144 durch die Drehfeder 146 wieder in ihre Grundstellung gedreht, die der Grundstellung der Ventilanordnung 100 entspricht. Das Betätigen des Magnetventils 126, wenn die Ventilanordnung 100 in der Heben-Stellung ist, oder beider Magnetventile 126, 127, entspricht hier also ebenfalls einer RTR-Funktion, durch die die Ventilanordnung 100 in die Grundstellung, bzw. eine Fahrtstellung, umschaltet.

Alle hierin erwähnten Beispiele wie auch bedingte Formulierungen sind ohne Einschränkung auf solche speziell angeführten Ausführungsbeispiele zu verstehen. Die Offenbarung ist nicht auf die hier beschriebenen Ausführungsbeispiele beschränkt. Es gibt Raum für verschiedene Anpassungen und Modifikationen, die der Fachmann aufgrund seines Fachwissens als auch zu der Offenbarung zugehörend in Betracht ziehen würde, ohne von den Merkmalen des Anspruchs 1 abzuweichen.

### Bezugszeichenliste (Bestandteil der Beschreibung)

- 1: Drucklufteinlass
- 2: Druckluftauslass
- 3: Entlüftungsauslass
- 5, 6: pneumatische Verbindungen
- 10: Ventileinrichtung
- 12: Gehäuse
- 14, 15: Ventile
- 16, 17: Ventilgehäuse
- 18, 19: Kolben
- 20, 21: Rückstellfedern
- 22: elektropneumatische Ansteuerung
- 23: manuelle Ansteuerung
- 24: pneumatische Leitung
- 26, 27: Magnetventile
- 30: Hebel
- 32, 33: Kontaktelement
- 34: Kurvenelement, Kurvenscheibe
- 36, 37: Federn
- 38, 39: Rastpunkte
- 40: Welle
- 50: Ventileinrichtung
- 52: Gehäuse
- 54,55: Ventil
- 56, 57: Kolben
- 58: Luftfederventilanschluss
- 60: manuelle Betätigung
- 62: Kurvenelement, Kurvenscheibe
- 64, 65: Rastpunkte
- 66, 67: Vertiefung
- 100: Ventileinrichtung
- 102: Gehäuse
- 110, 111: Ventile
- 112, 113: Kolben
- 114, 115: Rückstellfedern
- 124, 125: Magnetventile
- 130, 131: Kontaktelement
- 140: Hebel
- 142: Welle
- 144: Kurvenelement, Kurvenscheibe
- 146: Drehfeder
- 148: Rastpunkt

## Patentansprüche

1. Ventileinrichtung (10, 50, 100), umfassend ein erstes Ventil (14, 54, 110) und ein zweites Ventil (15, 55, 111), wobei
jedes der Ventile einen Kolben (18, 19, 112, 113) umfasst, wobei der Kolben (18, 112) des ersten Ventils (14, 54, 110) ein erstes Kontaktelement (32, 130) aufweist und der Kolben (19, 113) des zweiten Ventils (15, 55, 111) ein zweites Kontaktelement (33, 131) aufweist,
die Ventileinrichtung (10, 50, 100) eine Grundstellung aufweist,
die Ventileinrichtung (10, 50, 100) zur Betätigung des ersten Ventils (14, 54, 110) und des zweiten Ventils (15, 55, 111) eine elektropneumatische Ansteuerung (22) und eine manuelle Ansteuerung (23) aufweist, wobei die manuelle Ansteuerung (23) ein drehbares Bedienelement (30, 140) und ein mit dem Bedienelement (30, 140) gekoppeltes Kurvenelement (34, 62, 144) aufweist,
bei einer Betätigung des Bedienelements (30, 140) in einer ersten Weise, insbesondere in eine erste Drehrichtung, durch das Kurvenelement (34, 62, 144) über das erste Kontaktelement (32, 130) das erste Ventil (14, 54, 110) betätigt wird und bei einer Betätigung des Bedienelements (30, 140) in einer zweiten Weise, insbesondere in eine zweite, der ersten Drehrichtung entgegengesetzte Drehrichtung, durch das Kurvenelement (34, 62, 144) über das zweite Kontaktelement (33, 131) das zweite Ventil (15, 55, 111) betätigt wird,
und das Kurvenelement mindestens einen Rastpunkt (38, 39, 148) aufweist, in den eines der Kontaktelemente (32, 33, 130, 131) infolge der Betätigung des Bedienelements (30, 140) in der ersten Weise oder der zweiten Weise einrastet, sodass die Ventileinrichtung (10, 50, 100) eine Raststellung einnimmt, und bei einer Betätigung der elektropneumatischen Ansteuerung (22) ein Überhub stattfindet, durch den die Raststellung gelöst wird und die Ventileinrichtung (10, 50, 100) in die Grundstellung zurückkehrt,
wobei eine Welle (40, 142) mit dem Bedienelement (30, 140) und dem Kurvenelement (34, 62, 144) gekoppelt ist und
wobei die Kontaktelemente (32, 33, 130, 131) und die Kolben (18, 19, 112, 113) parallel zu einer durch die Welle (40, 142) definierten Achse verschiebbar angeordnet sind,
**dadurch gekennzeichnet, dass**
das Kurvenelement (34) rechtwinklig verschiebbar zu der Achse angeordnet ist.

2. Ventileinrichtung (10, 50, 100) nach einem der vorangehenden Ansprüche, wobei die Ventileinrichtung (10, 50, 100) eine Feder (36, 37, 146) aufweist, wobei die Feder (36, 37, 146) angeordnet ist, um das Kurvenelement (34, 62, 144) in eine Grundstellung des Kurvenelements (34, 62, 144) zu bewegen, die der Grundstellung der Ventileinrichtung entspricht.

3. Ventileinrichtung (10, 50, 100) nach einem der vorangehenden Ansprüche, wobei das Kurvenelement (34, 62, 144) als Kurvenscheibe (34, 62, 144) ausgebildet ist.

4. Ventileinrichtung (10, 50, 100) nach einem der vorangehenden Ansprüche, wobei das Kurvenelement (34, 62, 144) eine Kurvenbahn aufweist, in der der Rastpunkt (38, 39, 148) angeordnet ist.

5. Ventileinrichtung (10, 50, 100) nach einem der vorangehenden Ansprüche, wobei eines der Kontaktelemente (32, 33, 130, 131) als Teil des jeweiligen Kolbens (18, 19, 112, 113) oder als mit dem jeweiligen Kolben (18, 19, 112, 113) verbundener Stößel (32, 33, 130, 131) ausgebildet ist.

6. Ventileinrichtung (10, 50, 100) nach einem der vorangehenden Ansprüche, wobei das erste Ventil (14) für einen Belüftungsvorgang und das zweite Ventil (15) für einen Entlüftungsvorgang ausgestaltet sind, und wobei die Ventileinrichtung in der Grundstellung keinen Durchfluss aufweist.

7. Ventileinrichtung (10, 50, 100) nach einem der vorangehenden Ansprüche, wobei das erste Ventil (14) ein 4/2-Ventil ist und das zweite Ventil (15) ein 4/2- oder ein 3/2-Ventil ist.

8. Ventileinrichtung (10, 50, 100) nach einem der vorangehenden Ansprüche, wobei bei einer Betätigung des Bedienelements (30, 140) in der ersten Weise oder der zweiten Weise eines der Ventile (14, 15, 54, 55, 110, 111) betätigt wird und hierbei das Kontaktelement (32, 33, 130, 131) dieses Ventils (14, 15, 54, 55, 110, 111) in den Rastpunkt (38, 39) einrastet, und wobei bei einer Betätigung der elektropneumatischen Ansteuerung (22) für dieses Ventil (14, 15, 54, 55, 110, 111) ein Überhub des Kolbens (18, 19, 112, 113) dieses Ventils (14, 15, 54, 55, 110, 111) stattfindet, durch den die Raststellung dieses Kontaktelements (32, 33, 130, 131) gelöst wird und die Ventileinrichtung (10, 50, 100) in die Grundstellung zurückkehrt..

9. Ventileinrichtung (10, 50, 100) nach einem der Ansprüche 1 bis 5, wobei das erste Ventil (14, 54, 110) für einen Belüftungsvorgang und das zweite Ventil (15, 55, 111) für einen Entlüftungsvorgang ausgestaltet sind, und wobei die Ventileinrichtung (10, 50, 100) in der Grundstellung den Druckluftluftauslass (2) mit einem Luftfederventilanschluss (58) verbindet.

10. Ventileinrichtung (10, 50, 100) nach Anspruch 9, wobei das erste Ventil (14, 54, 110) ein 5/2-Ventil ist und das zweite Ventil (15, 55, 111) ein 4/2- oder ein 3/2-Ventil ist.

11. Ventileinrichtung (10, 50, 100) nach einem der Ansprüche 9 und 10, wobei das Kurvenelement (34, 62, 144) eine Kurvenbahn aufweist, die derart ausgestaltet ist, dass bei einer Betätigung des Bedienelements (30, 140) in der ersten Weise zuerst eine Stopp-Stellung erreicht wird, in der durch die das Kurvenelement (34, 62, 144) beide Kontaktelemente (32, 33, 130, 131) verschoben sind, und in der das Kurvenelement (34, 62, 144) mindestens einen Rastpunkt (64, 65) aufweist, in den eines der Kontaktelemente (32, 33, 130, 131) einrastet, und in der kein Durchfluss durch die Ventileinrichtung (10, 50, 100) stattfindet, und wobei bei einer weiteren Betätigung des Bedienelements (30, 140) in der ersten Weise eine Senken-Stellung oder eine Heben-Stellung erreicht wird, in der durch das Kurvenelement (34, 62, 144) nur eines der Kontaktelemente (32, 33, 130, 131) verschoben ist.

12. Ventileinrichtung (10, 50, 100) nach einem der vorhergehenden Ansprüche in Rückbezug auf Anspruch 2, wobei die Welle (40, 142) und das Kurvenelement (34, 62, 144) fest mit dem Bedienelement (30, 140) verbunden sind und/oder wobei die Feder (36, 37, 146) eine Drehfeder (146) ist, die mit dem Kurvenelement (34, 62, 144) gekoppelt ist und die angeordnet ist, um das Kurvenelement (34, 62, 144) in die Grundstellung des Kurvenelements (34, 62, 144) zu bewegen, die der Grundstellung der Ventileinrichtung (10, 50, 100) entspricht.

13. Ventileinrichtung (10, 50, 100) nach einem der vorangehenden Ansprüche, wobei die elektropneumatische Ansteuerung (22) für jedes der Ventile (14, 15, 54, 55, 110, 111) ein Magnetventil (26, 27, 124, 125) zur Steuerung einer Druckluftzufuhr für die Ventile (14, 15, 54, 55, 110, 111) aufweist.

14. Fahrzeug, das eine Ventileinrichtung (10, 50, 100) nach einem der Ansprüche 1 bis 13 aufweist.

## Claims

1. Valve device (10, 50, 100) comprising a first valve (14, 54, 110) and a second valve (15, 55, 111),
each of the valves comprising a piston (18, 19, 112, 113), the piston (18, 112) of the first valve (14, 54, 110) having a first contact element (32, 130) and the piston (19, 113) of the second valve (15, 55, 111) having a second contact element (33, 131),
the valve device (10, 50, 100) having a basic position,
the valve device (10, 50, 100) having an electropneumatic control (22) and a manual control (23) for actuating the first valve (14, 54, 110) and the second valve (15, 55, 111), the manual control (23) having a rotatable operating element (30, 140) and a cam element (34, 62, 144) which is coupled to the operating element (30, 140),
the first valve (14, 54, 110) being actuated by the cam element (34, 62, 144) via the first contact element (32, 130) when the operating element (30, 140) is actuated in a first manner, in particular in a first direction of rotation, and the second valve (15, 55, 111) being actuated by the cam element (34, 62, 144) via the second contact element (33, 131) when the operating element (30, 140) is actuated in a second manner, in particular in a second direction of rotation opposite to the first direction of rotation,
and the cam element having at least one latching point (38, 39, 148) in which one of the contact elements (32, 33, 130, 131) latches as a result of the operating element (30, 140) being actuated in the first manner or in the second manner, so that the valve device (10, 50, 100) assumes a latching position, and when the electropneumatic control (22) is actuated, an overstroke takes place, by means of which the latching position is released and the valve device (10, 50, 100) returns to the basic position, a shaft (40, 142) being coupled to the operating element (30, 140) and the cam element (34, 62, 144), and
the contact elements (32, 33, 130, 131) and the pistons (18, 19, 112, 113) being arranged so as to be displaceable
parallel to an axis defined by the shaft (40, 142),
**characterized in that**
the cam element (34) is arranged so as to be displaceable perpendicular to the axis.

2. Valve device (10, 50, 100) according to any of the preceding claims, wherein the valve device (10, 50, 100) has a spring (36, 37, 146), wherein the spring (36, 37, 146) is arranged so as to move the cam element (34, 62, 144) into a basic position of the cam element (34, 62, 144), which basic position corresponds to the basic position of the valve device.

3. Valve device (10, 50, 100) according to any of the preceding claims, wherein the cam element (34, 62, 144) is formed as a cam plate (34, 62, 144).

4. Valve device (10, 50, 100) according to any of the preceding claims, wherein the cam element (34, 62, 144) has a cam track in which the latching point (38, 39, 148) is arranged.

5. Valve device (10, 50, 100) according to any of the preceding claims, wherein one of the contact elements (32, 33, 130, 131) is formed as part of the relevant piston (18, 19, 112, 113) or as a tappet (32, 33, 130, 131) connected to the relevant piston (18, 19, 112, 113).

6. Valve device (10, 50, 100) according to any of the preceding claims, wherein the first valve (14) is configured for a ventilation process and the second valve (15) is configured for a venting process, and wherein the valve device in the basic position has no throughflow.

7. Valve device (10, 50, 100) according to any of the preceding claims, wherein the first valve (14) is a 4/2 valve and the second valve (15) is a 4/2 valve or a 3/2 valve.

8. Valve device (10, 50, 100) according to any of the preceding claims, wherein when the operating element (30, 140) is actuated in the first manner or in the second manner, one of the valves (14, 15, 54, 55, 110, 111) is actuated and the contact element (32, 33, 130, 131) of this valve (14, 15, 54, 55, 110, 111) thus latches in the latching point (38, 39), and wherein when the electropneumatic control (22) for this valve (14, 15, 54, 55, 110, 111) is actuated, an overstroke of the piston (18, 19, 112, 113) of this valve (14, 15, 54, 55, 110, 111) takes place, through which overstroke the latching position of this contact element (32, 33, 130, 131) is released and the valve device (10, 50, 100) returns to the basic position.

9. Valve device (10, 50, 100) according to any of claims 1 to 5, wherein the first valve (14, 54, 110) is configured for a ventilation process and the second valve (15, 55, 111) is configured for a venting process, and wherein the valve device (10, 50, 100) in the basic position connects the compressed air outlet (2) to an air spring valve connection (58).

10. Valve device (10, 50, 100) according to claim 9, wherein the first valve (14, 54, 110) is a 5/2 valve and the second valve (15, 55, 111) is a 4/2 valve or a 3/2 valve.

11. Valve device (10, 50, 100) according to any of claims 9 to 10, wherein the cam element (34, 62, 144) has a cam track which is configured such that when the operating element (30, 140) is actuated in the first manner, a stop position is reached first, in which both of the contact elements (32, 33, 130, 131) are displaced by the cam element (34, 62, 144), and in which the cam element (34, 62, 144) has at least one latching point (64, 65) in which one of the contact elements (32, 33, 130, 131) latches, and in which no flow through the valve device (10, 50, 100) takes place, and wherein when the operating element (30, 140) is further actuated in the first manner, a lowering position or a raising position is achieved in which only one of the contact elements (32, 33, 130, 131) is displaced by the cam element (34, 62, 144).

12. Valve device (10, 50, 100) according to any of the preceding claims when dependent on claim 2, wherein the shaft (40, 142) and the cam element (34, 62, 144) are fixedly connected to the operating element (30, 140) and/or wherein the spring (36, 37, 146) is a rotational spring (146) which is coupled to the cam element (34, 62, 144) and which is arranged so as to move the cam element (34, 62, 144) into the basic position of the cam element (34, 62, 144), which basic position corresponds to the basic position of the valve device (10, 50, 100).

13. Valve device (10, 50, 100) according to any of the preceding claims, wherein the electropneumatic control (22) for each of the valves (14, 15, 54, 55, 110, 111) has a solenoid valve (26, 27, 124, 125) for controlling a compressed air supply for the valves (14, 15, 54, 55, 110, 111).

14. Vehicle which has a valve device (10, 50, 100) according to any of claims 1 to 13.

## Revendications

1. Dispositif de soupape (10, 50, 100) comprenant une première soupape (14, 54, 110) et une seconde soupape (15, 55, 111), dans lequel
chacune des soupapes comprend un piston (18, 19, 112, 113), dans lequel le piston (18, 112) de la première soupape (14, 54, 110) présente un premier élément de contact (32, 130) et le piston (19, 113) de la seconde soupape (15, 55, 111) présente un second élément de contact (33, 131),
le dispositif de soupape (10, 50, 100) présente une position de base,
le dispositif de soupape (10, 50, 100) présente, pour l'actionnement de la première soupape (14, 54, 110) et de la seconde soupape (15, 55, 111), une commande électropneumatique (22) et une commande manuelle (23), dans lequel la commande manuelle (23) présente un élément de commande (30, 140) rotatif et un élément de came (34, 62, 144) accouplé à l'élément de commande (30, 140),
lors d'un actionnement de l'élément de commande (30, 140) d'une première manière, en particulier dans un premier sens de rotation, la première soupape (14, 54, 110) est actionnée par l'élément de came (34, 62, 144) par l'intermédiaire du premier élément de contact (32, 130) et lors d'un actionnement de l'élément de commande (30, 140) d'une seconde manière, en particulier dans un second sens de rotation opposé au premier sens de rotation, la seconde soupape (15, 55, 111) est actionnée par l'élément de came (34, 62, 144) par l'intermédiaire du second élément de contact (33, 131),
et l'élément de came présente au moins un point d'encliquetage (38, 39, 148) dans lequel l'un des éléments de contact (32, 33, 130, 131) s'encliquette à la suite de l'actionnement de l'élément de commande (30, 140) de la première manière ou de la seconde manière, de sorte que le dispositif de soupape (10, 50, 100) prend une position d'encliquetage, et lors d'un actionnement de la commande électropneumatique (22), il se produit une surcourse par laquelle la position d'encliquetage est libérée et le dispositif de soupape (10, 50, 100) revient dans la position de base, dans lequel un arbre (40, 142) est accouplé à l'élément de commande (30, 140) et à l'élément de came (34, 62, 144) et
dans lequel les éléments de contact (32, 33, 130, 131) et les pistons (18, 19, 112, 113) sont disposés de manière à pouvoir coulisser parallèlement à un axe défini par l'arbre (40, 142),
**caractérisé en ce que**
l'élément de came (34) est disposé de manière à pouvoir coulisser à angle droit par rapport à l'axe.

2. Dispositif de soupape (10, 50, 100) selon l'une des revendications précédentes, dans lequel le dispositif de soupape (10, 50, 100) présente un ressort (36, 37, 146), dans lequel le ressort (36, 37, 146) est disposé pour déplacer l'élément de came (34, 62, 144) vers une position de base de l'élément de came (34, 62, 144) qui correspond à la position de base du dispositif de soupape.

3. Dispositif de soupape (10, 50, 100) selon l'une des revendications précédentes, dans lequel l'élément de came (34, 62, 144) est réalisé sous la forme d'un disque à came (34, 62, 144).

4. Dispositif de soupape (10, 50, 100) selon l'une des revendications précédentes, dans lequel l'élément de came (34, 62, 144) présente une trajectoire de came dans laquelle est disposé le point d'encliquetage (38, 39, 148).

5. Dispositif de soupape (10, 50, 100) selon l'une des revendications précédentes, dans lequel l'un des éléments de contact (32, 33, 130, 131) est réalisé comme une partie du piston (18, 19, 112, 113) respectif ou comme un poussoir (32, 33, 130, 131) relié au piston (18, 19, 112, 113) respectif.

6. Dispositif de soupape (10, 50, 100) selon l'une des revendications précédentes, dans lequel la première soupape (14) est conçue pour une opération d'aération et la seconde soupape (15) est conçue pour une opération de purge, et dans lequel le dispositif de soupape ne présente pas de débit dans la position de base.

7. Dispositif de soupape (10, 50, 100) selon l'une des revendications précédentes, dans lequel la première soupape (14) est une soupape 4/2 et la seconde soupape (15) est une soupape 4/2 ou 3/2.

8. Dispositif de soupape (10, 50, 100) selon l'une des revendications précédentes, dans lequel, lors d'un actionnement de l'élément de commande (30, 140) de la première manière ou de la seconde manière, l'une des soupapes (14, 15, 54, 55, 110, 111) est actionnée et l'élément de contact (32, 33, 130, 131) de ladite soupape (14, 15, 54, 55, 110, 111) s'encliquette alors dans le point d'encliquetage (38, 39), et dans lequel, lors d'un actionnement de la commande électropneumatique (22) pour ladite soupape (14, 15, 54, 55, 110, 111), il se produit une surcourse du piston (18, 19, 112, 113) de ladite soupape (14, 15, 54, 55, 110, 111), par laquelle la position d'encliquetage dudit élément de contact (32, 33, 130, 131) est libérée et le dispositif de soupape (10, 50, 100) revient dans la position de base.

9. Dispositif de soupape (10, 50, 100) selon l'une des revendications 1 à 5, dans lequel la première soupape (14, 54, 110) est conçue pour une opération d'aération et la seconde soupape (15, 55, 111) est conçue pour une opération de purge, et dans lequel le dispositif de soupape (10, 50, 100) relie, dans la position de base, la sortie d'air comprimé (2) à un raccord de soupape à ressort pneumatique (58).

10. Dispositif de soupape (10, 50, 100) selon la revendication 9, dans lequel la première soupape (14, 54, 110) est une soupape 5/2 et la seconde soupape (15, 55, 111) est une soupape 4/2 ou une soupape 3/2.

11. Dispositif de soupape (10, 50, 100) selon l'une des revendications 9 et 10, dans lequel l'élément de came (34, 62, 144) présente une trajectoire de came qui est conçue de telle sorte que, lors d'un actionnement de l'élément de commande (30, 140) de la première manière, on atteint d'abord une position d'arrêt dans laquelle, grâce à l'élément de came (34, 62, 144), les deux éléments de contact (32, 33, 130, 131) sont déplacés, et dans laquelle l'élément de came (34, 62, 144) présente au moins un point d'encliquetage (64, 65) dans lequel s'encliquette l'un des éléments de contact (32, 33, 130, 131), et dans laquelle aucun débit n'a lieu à travers le dispositif de soupape (10, 50, 100), et dans lequel, lors d'un autre actionnement de l'élément de commande (30, 140) de la première manière on atteint une position d'abaissement ou une position de levage dans laquelle seul l'un des éléments de contact (32, 33, 130, 131) est déplacé par l'élément de came (34, 62, 144).

12. Dispositif de soupape (10, 50, 100) selon l'une des revendications précédentes en référence à la revendication 2, dans lequel l'arbre (40, 142) et l'élément de came (34, 62, 144) sont reliés de manière fixe à l'élément de commande (30, 140) et/ou dans lequel le ressort (36, 37, 146) est un ressort de torsion (146) qui est accouplé à l'élément de came (34, 62, 144) et qui est disposé pour déplacer l'élément de came (34, 62, 144) vers la position de base de l'élément de came (34, 62, 144), qui correspond à la position de base du dispositif de soupape (10, 50, 100).

13. Dispositif de soupape (10, 50, 100) selon l'une des revendications précédentes, dans lequel la commande électropneumatique (22) présente, pour chacune des soupapes (14, 15, 54, 55, 110, 111), une électrovanne (26, 27, 124, 125) pour la commande d'une alimentation en air comprimé pour les soupapes (14, 15, 54, 55, 110, 111).

14. Véhicule présentant un dispositif de soupape (10, 50, 100) selon l'une des revendications 1 à 13.
